# EUROPEAN PATENT APPLICATION

(11) **EP 4 481 447 A1**
(43) Date of publication of application: **25.12.2024**
(21) Application number: 24179892.5
(22) Date of filing: 04.06.2024
(51) Int. Cl.: G02B 5/12, G02B 5/122, G02B 30/00, G02B 30/56

(54) **DISPLAY DEVICE**

(30) Priority: 20.06.2023 JP 2023100635
(71) Applicant: Alps Alpine Co., Ltd., Ota-ku, Tokyo 145-8501 (JP)
(72) Inventor: Yoshimura, Takashi, Iwaki-City (JP)
(74) Representative: Schmitt-Nilson Schraud Waibel Wohlfrom Patentanwälte Partnerschaft mbB

(57) **Abstract**

A display device is capable of displaying an aerial image using retroreflection. The display device includes a light source, a three-dimensional object having at least one optical characteristic of light guiding or light diffusion and being illuminated by the light source, a retroreflective member configured to reflect light of the three-dimensional object, and an optical member that transmits the light reflected by the retroreflective member to form an aerial image of the three-dimensional object. The three-dimensional object includes at least an upper surface and one or more side surfaces connected to the upper surface, where at least part of the one or more side surfaces is tapered.

## Description

The present invention relates to display devices that display images in the air using retroreflection, and particularly relates to three-dimensional visualization of aerial images.

Aerial imaging by retroreflection (AIRR) has been known. For example, JP2017-107165A discloses a display device including two retroreflective members to display an aerial image that can be viewed with a wide view angle. Moreover, WO2022/138157A discloses an aerial image display system including a one-way mirror, and a reflective member selected from the group consisting of a concave mirror, a Fresnel mirror, and a retroreflective member, where the reflective member includes a reflective polarizing element that constitutes a reflection surface of the reflective member.

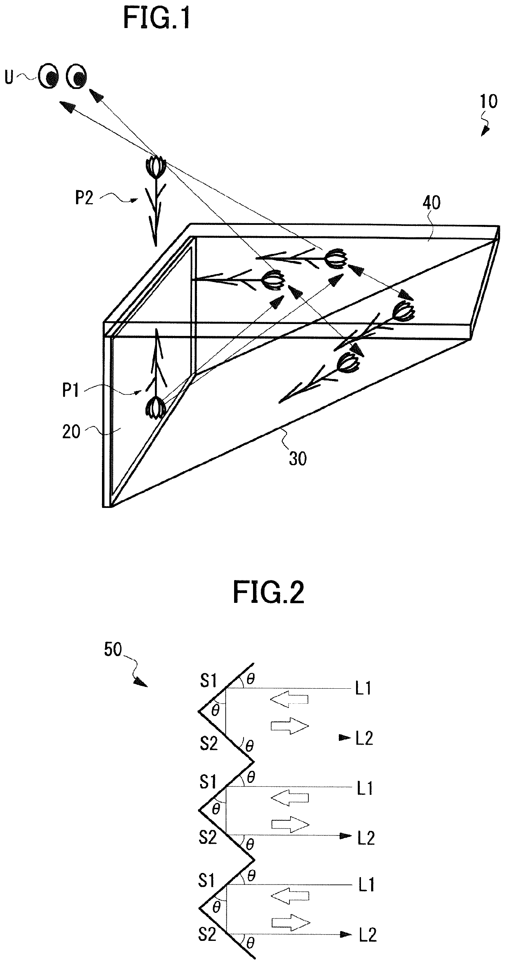

Most of the aerial imaging technologies of the related art use a display as a light source. When an image of the display is projected into the air, an aerial image itself is visualized as a two-dimensional image. Fig. 1 is a view illustrating one configuration example of a display device of an aerial image using retroreflection in the related art. The display device 10 includes a display 20 including a liquid crystal panel etc., a retroreflective member 30, and a beam splitter (or a one-way mirror) 40. As the display 20 displays an original image P1, light of the original image P1 emitted from the display 20 is reflected by the beam splitter 40 toward the retroreflective member 30, the light reflected by the retroreflective member 30 is transmitted through the beam splitter 40 to form an aerial image P2, thereby displaying the aerial image P2 in a direction of a line of sight of a user U.

In order to achieve three-dimensional visualization of planar images, there is a technology of shifting planar images according to an angle of a line of sight detected by a camera to use optical illusion. In the above technology, unless the line of sight is detected perfectly at 100%, shifting of images may be lagged, which may cause a discomfort. Moreover, a range the camera can detect a line of sight is basically limited to only one person in front of the camera so that a plurality of people cannot visually recognize a three-dimensional image at the same time. Particularly when an aerial image is used as a user interface (UI), it is desired that a subject (aerial image) has a physically three-dimensional structure rather than a flat surface.

One aspect of the present invention aims to provide a display device capable of realizing a three-dimensional visualization of aerial images.

The present disclosure relates to a display device according to the appended claims. Embodiments are disclosed in the dependent claims.

According to one aspect of the present invention, a display device is capable of displaying an aerial image using retroreflection. The display device includes a light source, a three-dimensional object, a retroreflective member, and an optical member. The three-dimensional object has at least one optical characteristic of light guiding or light diffusion and is illuminated by the light source. The retroreflective member is configured to reflect light of the three-dimensional object. The optical member transmits the light reflected by the retroreflective member to form an aerial image of the three-dimensional object. The three-dimensional object includes at least an upper surface and one or more side surfaces connected to the upper surface, where at least part of the one or more side surfaces is tapered.

Other objects and further features of the present invention will be apparent from the following detailed description when read in conjunction with the accompanying drawings, in which:
Fig. 1 is a view illustrating a configuration of a display device of the related art using retroreflection;
Fig. 2 is a view illustrating optical characteristics of a retroreflective member;
Fig. 3 is a view illustrating a configuration example of a display device of the present invention according to an embodiment;
Figs. 4A to 4C are views illustrating a three-dimensional object of a first embodiment of the present invention, where Fig. 4A is a perspective view as viewed from a front side of the three-dimensional object, Fig. 4B is a perspective view as viewed from a back side of the three-dimensional object, and Fig. 4C is an enlarged view of a cross-section cut along the line A-A of Fig. 4A;
Fig. 5 is a view illustrating an aerial image of the three-dimensional object of the first embodiment of the present invention; and
Figs. 6A to 6C are views illustrating a three-dimensional object of a second embodiment of the present invention, where Fig. 6A is a perspective view as viewed from a front side of the three-dimensional object, and Figs. 6B and 6C are enlarged views of the cross-section cut along the line B-B of Fig. 6A.

According to an embodiment of the present invention, a space is formed at a back side of the upper surface and the one or more side surfaces where the at least part of the one or more side surfaces is tapered. In a further embodiment, the three-dimensional object has a concavo-convex shape in a height direction of the three-dimensional object. In a further embodiment, processing is applied to an edge of the three-dimensional object so that there is a change in transmission or diffusion of light at the edge, where the edge is an edge at which the upper surface and one of the one or more side surfaces meet, or an edge at which one of the one or more side surfaces and another one of the one or more side surfaces meet. In a further embodiment, the processing includes edge roughening. In a further embodiment, the processing includes coating or addition of another material.

Next, embodiments of the present invention will be described. Particularly, the display device of the present invention displays a three-dimensional aerial image using retroreflection without designated spectacles, etc. The display device of the present invention can be applied to a user input interface using an aerial image. It should be noted that the drawings referred to in the following description of embodiments include exaggerated representations to facilitate understanding of the invention, and do not directly represent actual shapes or scales of products.

Next, embodiments of the present invention will be described in detail with reference to drawings. In a technology of generating aerial images (aerial imaging using retroreflection [AIRR]), use of a retroreflective member (retroreflector) is crucial. A retroreflective member is an optical member configured to reflect incident light back in the same direction. For example, a retroreflective member may be formed of or include prism retroreflection elements, such as triangular pyramid retroreflection elements and full cube corner retroreflection elements, or bead retroreflection elements.

Fig. 2 illustrates a cross-section of triangular pyramid retroreflection elements, and schematically illustrating a relationship between incident light and reflected light. Reflection surfaces S1 and S2 of the triangular pyramid retroreflection elements 50 are perpendicular to each other. Incident light L1 that is incident on the reflection surface S1 at an incident angle (n/2-θ) is reflected by the reflection surfaces S1 and S2. A reflection angle of the reflected light L2 that is reflected by the reflection surface S2 is identical to the incident angle (π/2-θ). Specifically, the reflected light L2 is reflected in the same direction to the incident light L1. Because of the configuration of the retroreflective member, there is a displacement between the position of the incident light L1 and the position of the reflected light L2. This displacement may lower vividness or resolution of an aerial image, thereby impairing visibility of the aerial image.

In a case where an aerial image is displayed using retroreflection, an original image is three-dimensionally represented so that an aerial image can be three-dimensionally visualized. However, if resolution of an aerial image is lowered due to the configuration of the retroreflective member as described above, it is difficult to achieve visualization of a vivid stereoscopic aerial image only through the three-dimensional visualization of the original image. Particularly, if edges of an aerial image are not clear, the edges are not sharp enough, or the aerial image does not provide a sense of depth, a user may not be able to three-dimensionally view the aerial image. In view of the points mentioned above, the display device of the present embodiment enables display of a vivid stereoscopic aerial image.

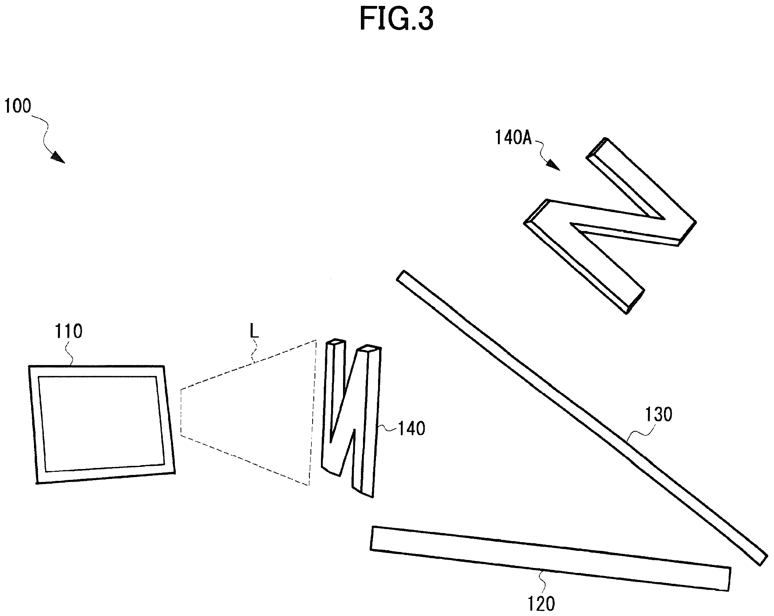

Fig. 3 is a view illustrating a configuration example of a display device of the present invention according to an embodiment. As illustrated in Fig. 3, the display device 100 of the present embodiment includes a light source 110, a retroreflective member 120, an optical member 130 including a beam splitter or a one-way mirror, and a three-dimensional object 140.

A configuration of the light source 110 is not particularly limited, as long as the light source 110 can illuminate the three-dimensional object 140. For example, the light source 110 includes a LED light in which a plurality of LEDs are two-dimensionally arranged. A wavelength of light output from the light source 110 is arbitrary. For example, white light is emitted from the light source 110. The light source 110 may emit polarized light as appropriate. To emit the polarized light, a light emitting element or a polarization filter may be used.

The retroreflective member 120 is an optical member configured to reflect incident light back in the same direction. A configuration of the retroreflective member 120 is not particularly limited. For example, the retroreflective member 120 may be formed of or include prism retroreflection elements, such as a triangular pyramid retroreflection elements, as illustrated in Fig. 2, and full cube corner retroreflection elements, or bead retroreflection elements. Moreover, retroreflective member 120 may include a retardation film, such as a λ/4 plate on a reflecting surface of the retroreflective member 120.

The optical member 130 includes a beam splitter or a one-way mirror, and has a function of transmitting part of incident light, and reflecting part of the incident light. Part of the light of the three-dimensional object 140 illuminated by the light source 110 is reflected by the optical member 130, the reflected light is incident on the retroreflective member 120, and part of the light reflected in the same direction as the incident light is transmitted through the optical member 130 to form an aerial image 140A. The aerial image 140A is formed at a position to be line-symmetric to the three-dimensional object 140 with respect to the optical member 130.

The three-dimensional object 140 is produced using a material that transmits light, such as glass, acrylic plastics, polycarbonate resins, or cycloolefin-based resins. The three-dimensional object 140 has an optical characteristic of light guiding or light diffusion, or both. A three-dimensional shape, size, etc., of the three-dimensional object 140 are not particularly limited. The three-dimensional object 140 has a three-dimensional shape to be displayed as an aerial image. For example, the three-dimensional object 140 may be various three-dimensional shapes, such as letters, geometric shapes, symbols, figures, and the like. In the present embodiment, the three-dimensional object 140 has a three-dimensional shape of the letter "N."

The three-dimensional object 140 is irradiated with light emitted from the light source (LED unit) 110, and the irradiated light is guided into a transparent member of the three-dimensional object 140 or scattered at a surface of the transparent member so that the three-dimensional object 140 is illuminated as if the three-dimensional object 140 itself is a three-dimensional light source "N."

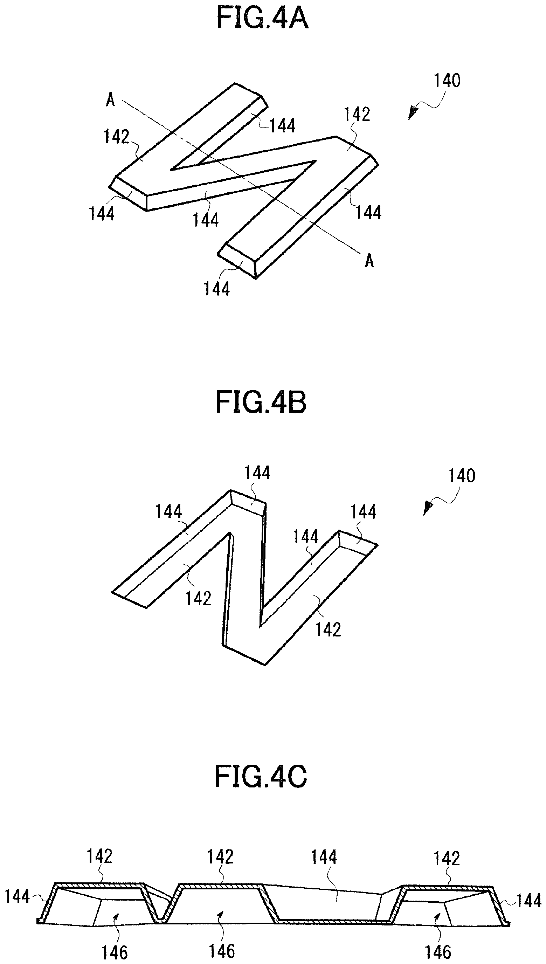

Figs. 4A to 4C are views illustrating details of a three-dimensional object of a first embodiment. Fig. 4A is a perspective view illustrating a three-dimensional object 140 as viewed from the front side of the three-dimensional object 140. Fig. 4B is a perspective view illustrating the three-dimensional object 140 as viewed from the back side of the three-dimensional object 140. Fig. 4C is an enlarged view of the cross-section cut along the line A-A of Fig. 4A. In one embodiment, the three-dimensional object 140 is formed by processing a transparent member into an "N" shape, where the transparent member is a thin plate having a predetermined thickness. An upper surface 142 of the three-dimensional object 140 represents a planar shape of "N," and side surfaces 144 are extended from the upper surface 142 toward a bottom surface, where the side surfaces 144 are tapered. Specifically, an angle formed between the upper surface 142 and each of the side surfaces 144 is an obtuse angle, and a depth of the three-dimensional object 140 increases from the upper surface 142 toward the bottom surface as illustrated in Fig. 4C, whereby forming a trapezoidal cavity or space 146 at the back side of the upper surface 142 and the side faces 144. The tapered angle is appropriately selected according to a three-dimensional shape of the three-dimensional object 140.

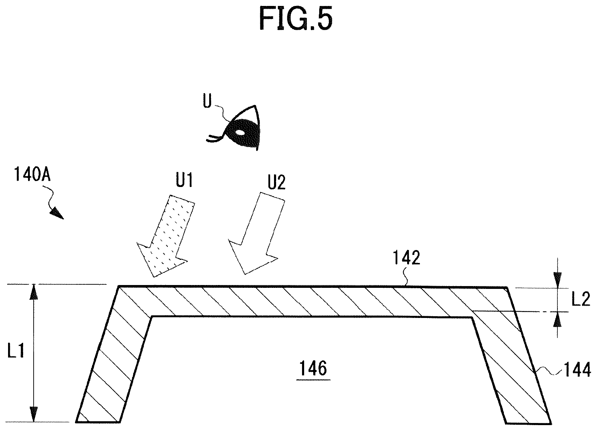

Fig. 5 is a view illustrating an example of an aerial image of the three-dimensional object, and schematically illustrates the aerial image of part of the three-dimensional object. As described above, the three-dimensional object 140 includes the upper surface 142, the tapered side surfaces 144, and the space 146. When the three-dimensional object 140 is illuminated by the light source (LED light) 110, an aerial image 140A of the three-dimensional object 140 is displayed. An installation position or installation direction of the three-dimensional object 140 is arbitrary. For example, the three-dimensional object 140 is arranged so that the upper surface 142 of the aerial image 140A is directed to a line of sight of a user U.

As illustrated in Fig. 5, how the three-dimensional object 140 is visualized changes depending on the line of sight U1 or U2 of the user U. Along the light of sight U1, a thickness L1 of the transparent member becomes large due to the tapered portion of the side surface 144 so that intended light guiding is not easily achieved in the thick portion. As a result, the thick portion appears dark. Along the line of sight U2 where the side surface is not present, conversely, a thickness L2 of the transparent member is thin due to the space 146 formed at the back side so that intended light guiding is easily achieved in the thin portion. As a result, the thick portion appears bright. Specifically, the degree of light guiding changes depending on the position or angle at which a user views, thus an appearance (brightness) changes, which allows an aerial image of the three-dimensional object to be viewed more three-dimensionally.

As described above, in the present embodiments, tapering or a concavo-convex shape is formed in a height direction of the three-dimensional object, which changes the brightness according to the degree of the light guiding of the three-dimensional object depending on a line of sight of a user. As a result, more vivid three-dimensional visualization of an aerial image can be achieved.

In the above embodiments, the upper surface 142 and the tapered side surfaces 144 of the three-dimensional object 140, and the space 146 at the back are formed by bending the transparent member that is a thin plate. This is merely one example. Other than the method as mentioned, for example, tapering may be provided by machining side surfaces of a transparent member having a predetermined thickness, and forming a concave shape or a recess in a back surface of the transparent member to form a space 146, or a three-dimensional object may be formed by injection molding using a mold for injection molding.

In the above embodiments, tapering is given to all of the side surfaces 144 of the three-dimensional object 140. However, this is merely one example, and the tapering is not necessarily limited to the above embodiments. For example, tapering or a space may be formed for only parts of side surfaces of the three-dimensional object 140 at which a stereoscopic effect is desired to be enhanced.

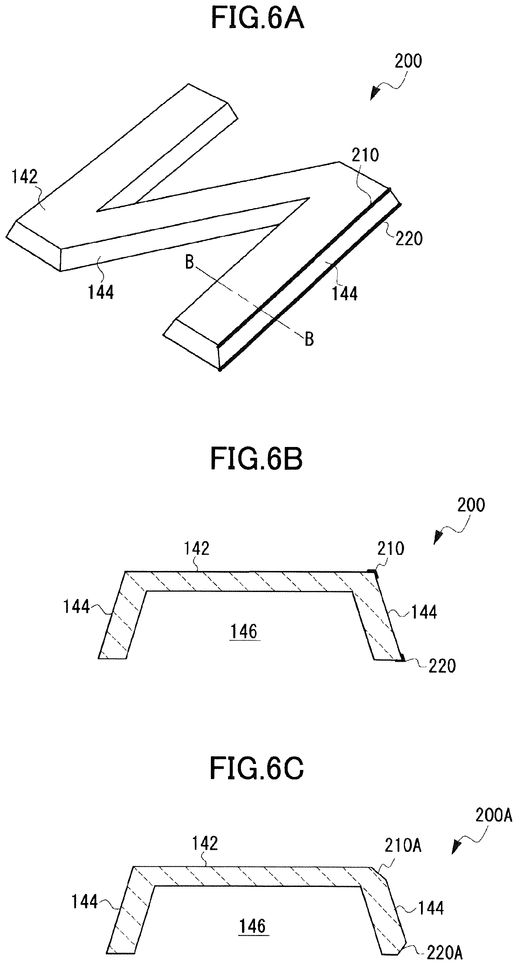

Next, a second embodiment of the present invention will be described. In the second embodiment, edges of the three-dimensional object 140 are processed to cause a change in transmission or diffusion of light. Figs. 6A to 6C are views illustrating a three-dimensional object according to the second embodiment. Fig. 6A is a perspective view of the three-dimensional object as viewed from the front side of the three-dimensional object, and Figs. 6B and 6C are enlarged views of the cross-section cut along the line B-B of Fig. 6A.

In the second embodiment, edge processing that causes a change in transmission or diffusion of light is applied to an edge 210 at which the upper surface 142 and the side surface 144 of the three-dimensional object 200 meet, or an edge 220 present at the bottom side of the side surface 144. As the edge processing, for example, a black material (polylactic acid [PLA]) is applied to the edges 210 and 220 as illustrated in Fig. 6B. For example, the black material is applied to have a width of approximately 1 mm and a thickness of approximately 0.5 mm. Since the black coating material is applied, light guiding becomes weak at the edges 210 and 220 of the three-dimensional object 200 so that a contrast with other portions is increased. As a result, the edges 210 and 220 are relatively emphasized, thereby enhancing a stereoscopic effect of an aerial image. A color of the coating material is not necessarily limited to black. A coating width or thickness is not particularly limited. The color or size is not limited as long as a change can be caused in transmission of light or light guiding with the color or size of a coating material for use. Moreover, other than coating of the material, another material may be added or bonded to cause a change in transmission of light or light guiding.

As another embodiment, for example, surface roughening may be performed on the edges 210A and 220B as the edge processing, as illustrated in Fig. 6C. As a result, diffusion or scattering of light occurs at the edges 210A and 220A to increase the contrast between the edges 210A and 220A and other portions, thereby emphasizing the edges 210A and 220A in an aerial image. When roughening is performed, for example, the edges 210A and 220B may be chamfered, and surface roughening may be applied on the chamfered surfaces.

As described above, according to the above embodiments, edge processing, which can cause a change in transmission or diffusion of light, is performed on edges of the three-dimensional object to emphasize the edges of the three-dimensional object, thereby displaying a vivid stereoscopic aerial image.

In the above embodiments, the edge processing is applied to some of the edges, i.e., the edges 210 and 220, of the three-dimensional object 200. A position or number of the edges to which edge processing is applied is arbitrary. For example, the edge processing is applied to edges at which a stereoscopic effect is desired to be enhanced. For example, other than the edges at which the upper surface and one of the side surfaces meet, an edge at which one side surface and another side surface meet may be processed.

In the above, the letter "N" is represented as the three-dimensional object. However, this is merely one example. Other than a letter, the three-dimensional object may three-dimensionally represent a number, a symbol, a geometrical shape, a character, or the like. For example, the three-dimensional object is appropriately determined according to an aerial image used for a user interface. Moreover, the display device of the present embodiment can be applied to a user input interface. For example, the display device of the present embodiment can be applied as input buttons of computer devices, of in-vehicle electronic devices, of an ATM of banks and the like, of ticket machines at stations and the like, of elevators, and the like.

According to aspects of the present invention, tapering is provided to one or more side surfaces of the three-dimensional object to change the brightness between the tapered portions and other portions depending on the viewed position or angle, thereby realizing more vivid three-dimensional visualization of an aerial image of the three-dimensional object. Moreover, processing is applied to an edge of the three-dimensional object to cause a change in transmission or diffusion of light at the edge to make the edge of the aerial image more vivid, thereby enhancing a stereoscopic effect of the aerial image.

Although embodiments of the present invention have been described in detail, the present invention is not limited to the specific embodiments, and various modifications and changes can be made within the scope of the claims.

## Claims

1. A display device capable of displaying an aerial image using retroreflection, the display device comprising:
a light source;
a three-dimensional object having at least one optical characteristic of light guiding or light diffusion and being illuminated by the light source;
a retroreflective member configured to reflect light of the three-dimensional object; and
an optical member that transmits the light reflected by the retroreflective member to form an aerial image of the three-dimensional object,
wherein the three-dimensional object includes at least an upper surface and one or more side surfaces connected to the upper surface, where at least part of the one or more side surfaces is tapered.

2. The display device according to claim 1,
wherein a space is formed at a back side of the upper surface and the one or more side surfaces where the at least part of the one or more side surfaces is tapered.

3. The display device according to claim 1 or 2,
wherein the three-dimensional object has a concavo-convex shape in a height direction of the three-dimensional object.

4. The display device according to one of claims 1 to 3,
with processing being applied to an edge of the three-dimensional object so that there is a change in transmission or diffusion of light at the edge, where the edge is an edge at which the upper surface and one of the one or more side surfaces meet, or an edge at which one of the one or more side surfaces and another one of the one or more side surfaces meet.

5. The display device according to claim 4,
wherein the processing includes edge roughening.

6. The display device according to claim 4,
wherein the processing includes coating or addition of another material.
